Europäisches Patentamt

European Patent Office

Office européen des brevets

(19)

(11) Veröffentlichungsnummer: **0 035 705**
**B1**

(12) EUROPÄISCHE PATENTSCHRIFT

(45) Veröffentlichungstag der Patentschrift:
09.05.84

(51) Int. Cl.³: **B 01 D 19/02**

(21) Anmeldenummer: 81101401.8

(22) Anmeldetag: 26.02.81

(54) Mechanischer Schaumzerstörer und Verfahren zur mechanischen Schaumzerstörung.

(30) Priorität: 06.03.80 DE 3008589

(43) Veröffentlichungstag der Anmeldung:
16.09.81 Patentblatt 81/37

(45) Bekanntmachung des Hinweises auf die Patenterteilung:
09.05.84 Patentblatt 84/19

(84) Benannte Vertragsstaaten:
AT BE CH DE FR GB LI NL

(56) Entgegenhaltungen:
DE - A - 1 750 319
DE - A - 2 120 140
DE - A - 2 345 374
DE - A - 2 428 312
DE - A - 2 839 013
DE - C - 329 658
US - A - 4 110 089

(73) Patentinhaber: BAYER AG, Konzernverwaltung RP
Patentabteilung, D-5090 Leverkusen 1 Bayerwerk (DE)

(72) Erfinder: Zlokarnik, Marko, Prof. Dr., Wolfskaul 5,
D-5000 Köln 80 (DE)

## Beschreibung

Gegenstand der vorliegenden Anmeldung sind mechanische Schaumzerstörer, sowie ein Verfahren zur mechanischen Schaumzerstörung mittels mechanischer Schaumzerstörer, die einen Ansaugstutzen und mindestens drei offene Kanäle, die von dem Ansaugstutzen unter einem Winkel von 30 bis 60° radial nach aussen abgehen, enthalten.

Bei chemischen, mikrobiologischen und verfahrenstechnischen Operationen, bei denen eine flüssige Phase mit einem Gas in Kontakt gebracht wird, oder bei denen Gas ensteht, tritt oft das Problem der Schaumbildung auf. Diese unerwünschte Erscheinung wird mit chemischen, thermischen oder mechanischen Mitteln bzw. Methoden bekämpft.

Die chemische Methode, Zugabe von Entschäumern, wie z.B. Silikonölen, nicht-ionischen Tensiden usw., hat den Nachteil, dass sie die physikalische und chemische Beschaffenheit des Systems verändert und daher in vielen Fällen nicht angewendet werden kann. Die thermische Methode, Erhitzung des Schaumes, hat sich oft als produktschädigend und ausserdem ineffektiv erwiesen. So werden heute insbesondere in der chemischen und mikrobiologischen Verfahrenstechnik zur Schaumbeseitigung bevorzugt mechanische Schaumzerstörer angewandt.

Die mechanischen Schaumzerstörer beseitigen den Schaum, indem sie ihn einer Scherbeanspruchung und/oder einer Fliehkraft aussetzen. Zur ersten Klasse gehören die Injektor- bzw. Ejektordüsen, die mit Dampf oder Druckluft betrieben werden, zur zweiten die Zentrifugen und Zyklone. Beide Verfahrensprinzipien werden bei rotierenden Scheiben und bei Schaufelrädern angewendet. Eine besondere Schaum-Zentrifuge wird z.B. beschrieben in F. Müller, Chem. Rundschau, *28*, (1975) 18, Seiten 3 bis 7.

Ein häufiger Nachteil der mechanischen Schaumzerstörer, insbesondere derer vom Typ Schaufelrad, besteht darin, dass sie den verflüssigten Schaum mit einer hohen Bewegungsenergie herausschleudern, wodurch dieser beim Aufprallen gegen die Behälterwanderung bzw. gegen die Flüssigkeitsoberfläche wiederum Schaum erzeugt. Viele Schaumzerstörer, insbesondere vom Typ Zentrifuge, haben wiederum grossflächige und enge Kanäle, die verstopfungsanfälig und schwer zu reinigen sind.

Von einem mechanischen Schaumzerstörer, der insbesondere in Bioreaktoren eingesetzt werden soll, wird gefordert, dass er einerseits in bezug auf die Biomasse schonend arbeitet und dennoch eine hohe Leistungsfähigkeit aufweist und andererseits verstopfungsfrei und nicht verkrustungsanfällig ist und sich leicht säubern bzw. warten und sterilisieren lässt.

Diese Forderungen erfüllt der erfindungsgemässe Schaumzerstörer.

Gegenstand der vorliegenden Erfindung ist daher ein mechanischer Schaumzerstörer, der einen sich drehenden hohlen Ansaugstutzen 1 für den Schaum und mindestens 3 offene Kanäle 2, welche von dem Ansaugstutzen 1 unter einem Winkel von 30 bis 60°, vorzugsweise von 40 bis 50°, radial nach aussen abgehen, enthält. Die Vorrichtungen wird unmittelbar unter dem Deckel des Behälters angeordnet, so dass der herausgeschleuderte verflüssigte Schaum unter einem möglichst stumpfen Winkel, vorzugsweise angenähert tangential, auf den Behälterdeckel trifft und an ihm abgebremst wird, ohne neuen Schaum erzeugen zu können.

Ein weiterer Gegenstand der vorliegenden Erfindung ist ein Verfahren zur mechanischen Schaumzerstörung, welches dadurch gekennzeichnet ist, dass der Schaum in einen rotierenden Ansaugstutzen gesaugt wird, auf mindestens 3 Kanäle unter einem Winkel $\alpha$ von 30 bis 60° radial nach aussen vom Ansaugstutzen abgehende Kanäle verteilt wird, Ansaugstutzen und Kanäle um die gemeinsame Achse in Rotation versetzt werden und der Schaum unter der Wirkung der auftretenden Rotationskräfte innerhalb der Kanäle verdichtet und nach aussen abgeschleudert wird.

Zwischen dem erfindungsgemässen Schaumzerstörer und den bekannten Schaum-Zentrifugen besteht ein wesentlicher Unterschied: Der Schaum, der durch den Ansaugstutzen aufsteigt und gleichmässig auf die Rohre verteilt wird, wird in jedem Rohr einer Drehbewegung unterworfen, der er wegen der festen Begrenzung (Rohrwand) nicht ausweichen kann. Dabei wird er verdrillt, gewalkt und auf diese Weise wirkungsvoll komprimiert; er verlässt die Rohre als ein bis zu einem fliessfähigen Zustand verdichtetes Gemisch Gas/Flüssigkeit, im nachfolgenden verflüssigter Schaum genannt.

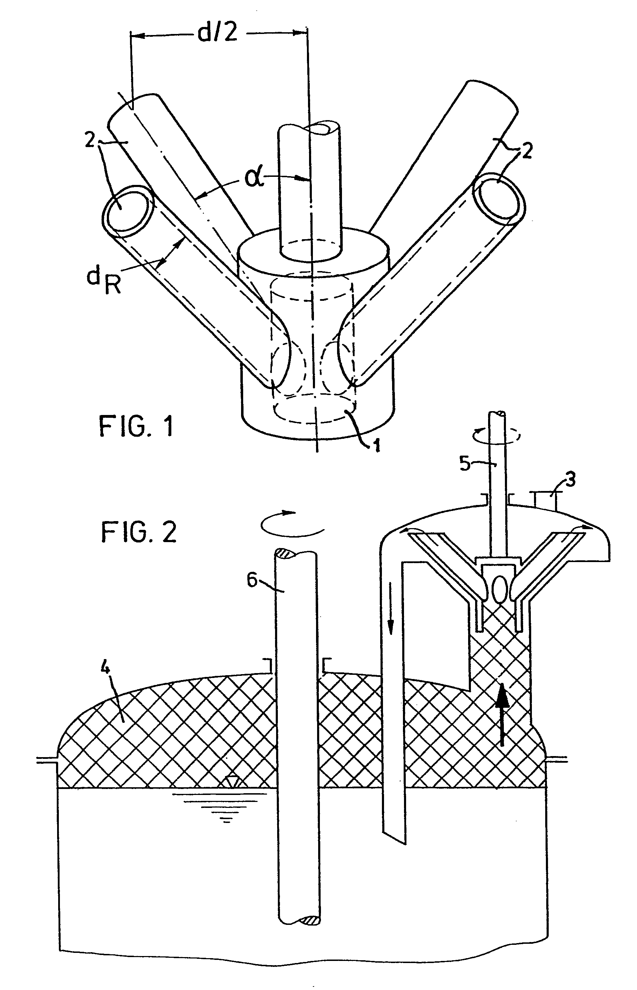

Versuche mit verschiedenen, geometrisch jedoch untereinander ähnlichen Vorrichtungen dieses Typs (4 Rohrarme; $\alpha = 45°$; d = 80, 120, 320 mm; $d/d_R = 10$; d, $d_R$ - siehe Fig. 1) wurden in einer Apparatur durchgeführt, die schematisch in Fig. 2 dargestellt ist. Als Stoffsystem wurde entsalztes Wasser mit Zusatz von 1 g/l eines sehr wirkungsvollen Emulgators vom Typ Alkyläthersulfat und Luft verwendet. Als Begasungsvorrichtung wurde eine poröse Sinterplatte (Fritte) eingesetzt. Der Luftdurchsatz und damit der Schaumanfall wurde so eingestellt, dass die Leerrohrgeschwindigkeit v im Ansaugstutzen des Schaumzerstörers immer v = 1000 m/h (0,275 m/s) betrug. Bei den Versuchen wurde die Umfangsgeschwindigkeit u des Schaumzerstörers (u = $\pi$nd; n = Drehzahl, d = Durchmesser) variiert und die Dichte des erzeugten verflüssigten Schaumes bestimmt.

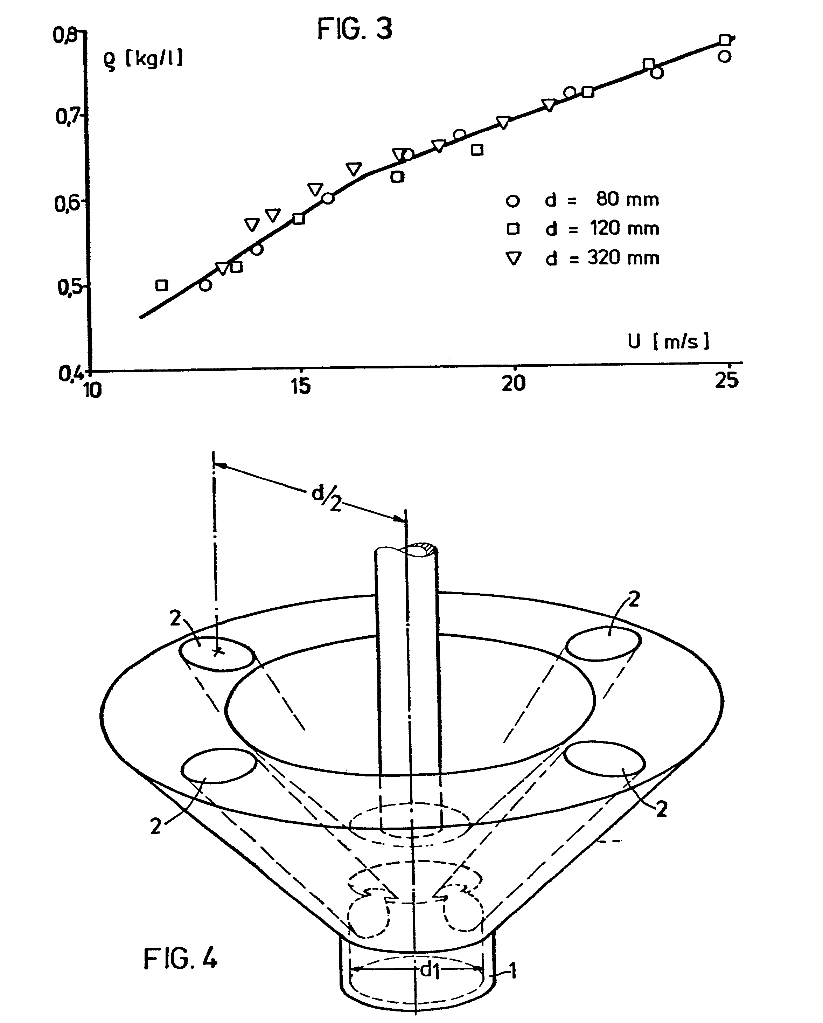

Die Darstellung in Fig. 3 zeigt die Abhängigkeit $\alpha = f (u)$. Man erkennt die Bedeutung der Umfangsgeschwindigkeit für den Schaumzerstörungsvorgang. Damit der Schaum, welcher eine Dichte von $\alpha = 0,1$ kg/l aufweist, fliessfähig wird, muss er zu einer sämigen Flüssigkeit mit der Dichte $\alpha = 0,5-0,6$ kg/l verdichtet werden. Eine weitergehende Verdichtung ist technisch meist nicht mehr interessant; sie ist gemäss Fig. 3 nur mit einer wesentlichen Steigerung der Umfangsgeschwindigkeit und damit des Leistungsverbrauches des mechanischen Schaumzerstörers zu erreichen.

Fig. 2 zeigt eine Möglichkeit des Einsatzes des erfindungsgemässen Schaumzerstörers in einer Abgasleitung. Für den Einsatz innerhalb eines Reaktionsbehälters bzw. Bioreaktors eignet sich in Fig. 1 vorgestellte Ausführungsform zwar auch; da dieser Schaumzerstörer mit seinen Armen jedoch eine starke Turbulenz im Gasraum verursacht, wird beim direkten Einsatz im Gasraum der erfindungsgemässe Schaumzerstörer bevorzugt in der glatten Ausführungsform, wie in Fig. 4 dargestellt, eingesetzt.

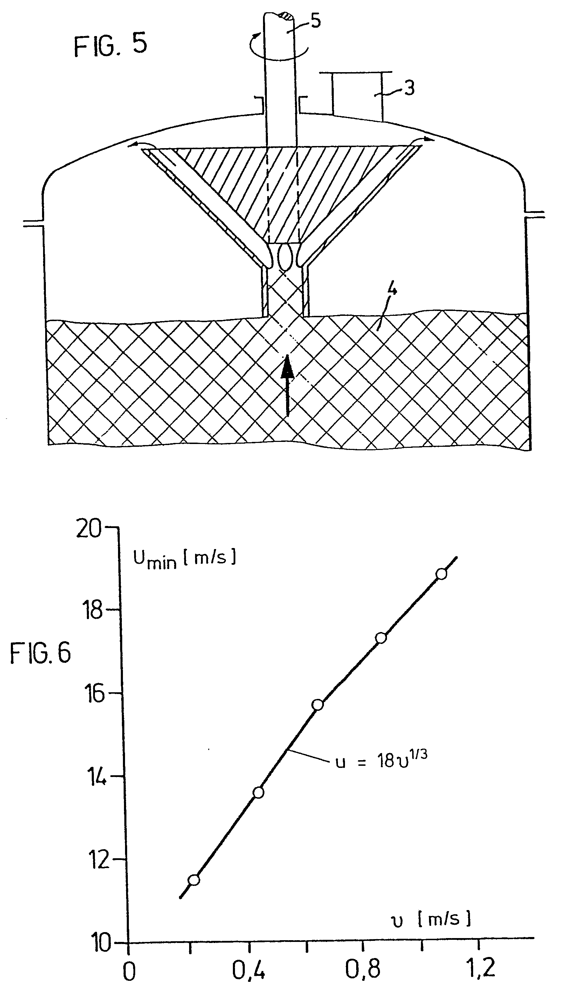

Versuche mit einem Schaumzerstörer der glatten Form (4 Kanäle, $\alpha = 45°$; d = 200 mm, $d/d_R = 10$), welcher in einem Behälter von 400 mm Durchmesser knapp unterhalb des Deckels angeordnet war, Fig. 5, und bei denen mit gleichem Stoffsystem wie zuvor gearbeitet wurde, zeigten, dass sich dieser Schaumzerstörer bestens zum Betrieb innerhalb eines Behälters eignet. Fig. 6 zeigt die bei diesen Versuchen ermittelte Abhängigkeit der Mindest-Umfangsgeschwindigkeit $u_{min}$ von der Leerrohrgeschwindigkeit des Schaumes im Ansaugstutzen.

Die in Fig. 4 aufgezeigte, erfindungsgemäss bevorzugte, glatte Ausführungsform des Schaumzerstörers erfüllt alle Voraussetzungen, die eingangs als Bedingungen für einen leistungsfähigen und wartungsfreien Apparat genannt worden sind. Der Schaumzerstörer kann auch aus verschiedenen Materialien, vorzugsweise Leichtmetall oder auch aus Kunststoff, gefertigt werden und lässt sich bei Bedarf schnell reinigen.

Vorzugsweise weisen die Kanäle einen runden Querschnitt auf. Die Länge der Kanäle ist erfindungsgemäss durch den gewählten Winkel $\alpha$ und den Durchmesser d begrenzt. Die Austrittsöffnungen der Kanäle liegen alle in einer Ebene innerhalb eines Kreises, dessen Durchmesser mit d angegeben ist. In der Fig. 1 und 4 ist der Radius des Kreises mit d/2 angegeben.

Die Zahl der Kanäle hat auf die Mindestumfangsgeschwindigkeit einen vergleichsweise geringen Einfluss. Besonders gute Ergebnisse werden erfindungsgemäss erzielt, wenn der Schaumzerstörer mindestens drei, vorzugsweise 4-10 und ganz besonders bevorzugt 4-8 Kanäle enthält.

Vorzugsweise beträgt der Durchmesser d mindestens 200 mm, besonders bevorzugt über 250 mm.

Der Innendurchmesser des Ansaugstutzens ($d_1$) in dem Teil, wo die Kanäle abzweigen, sollte mindestens 20 mm betragen. In einer erfindungsgemäss besonders bevorzugten Ausführungsform liegt das Verhältnis von d zu $d_1$ zwischen 2 und 6, vorzugsweise 3 und 4 und das Verhältnis von d zu $d_R$ (Kanaldurchmesser) zwischen 6 und 12, vorzugsweise 8 und 10.

$d_R$ ist laut dem Satz zuvor mit d gekoppelt und damit bereits bestimmt.

## Patentansprüche

1. Mechanischer Schaumzerstörer enthaltend einen sich drehenden Ansaugstutzen (1) für den Schaum und mindestens 3 Kanäle (2) die von dem Ansaugstutzen (1) unter einem Winkel $\alpha$ von 30 bis 60° radial nach aussen abgehen.

2. Mechanischer Schaumzerstörer nach Anspruch 1, dadurch gekennzeichnet, dass die Kanäle (2) einen runden Querschnitt besitzen.

3. Mechanischer Schaumzerstörer nach den Ansprüchen 1 oder 2, dadurch gekennzeichnet, dass der Winkel $\alpha$ 40 bis 50° beträgt.

4. Mechanischer Schaumzerstörer nach einem oder mehreren der Ansprüchen 1 bis 3, dadurch gekennzeichnet, dass er 3 bis 10, vorzugsweise 4 bis 8 Kanäle enthält.

5. Mechanischer Schaumzerstörer nach einem oder mehreren der Ansprüche 1 bis 4, dadurch gekennzeichnet, dass die Austrittsöffnungen der Kanäle (2) auf einem Kreis vom Durchmesser d von mindestens 200 mm angeordnet sind, der Durchmesser $d_R$ des Kanals mindestens 20 mm und der Durchmesser $d_1$ des Ansaugstutzens mindestens 40 mm beträgt.

6. Mechanischer Schaumzerstörer nach einem oder mehreren der Ansprüche 1 bis 5, dadurch gekennzeichnet, dass das Verhältnis von d zu $d_1$ zwischen 2 und 6 und d zu $d_R$ zwischen 6 und 12 liegt.

7. Verfahren zur mechanischen Schaumzerstörung, dadurch gekennzeichnet, dass der Schaum in einen rotierenden Ansaugstutzen gesaugt wird, auf mindestens 3 unter einem Winkel $\alpha$ von 30 bis 60° radial nach aussen vom Ansaugstutzen abgehende Kanäle verteilt wird, Ansaugstutzen und Kanäle um die gemeinsame Achse in Rotation versetzt werden und der Schaum unter der Wirkung der auftretenden Rotationskräfte innerhalb der Kanäle verdichtet und nach aussen abgeschleudert wird.

## Claims

1. A mechanical foam breaker containing a rotating suction tube (1) for the foam and at least 3 channels (2) which branch outwards radially from the suction tube (1) at an angle $\alpha$ of 30 to 60°.

2. A mechanical foam breaker according to claim 1, characterised in that the channels (2) have a circular cross-section.

3. A mechanical foam breaker according to one of claims 1 or 2, characterised in that the angle $\alpha$ is 40 to 50°.

4. A mechanical foam breaker according to one or more of claims 1 to 3, characterised in that it contains 3 to 10, preferably 4 to 8, channels.

5. A mechanical foam breaker according to one or more of claims 1 to 4, characterised in that the outlet openings of the channels (2) are arranged on a circle having a diameter d of at least 200 mm, the diameter $d_R$ of the channel is at least 20 mm and the diameter $d_1$ of the suction tube is at least 40 mm.

6. A mechanical foam breaker according to one or more of claims 1 to 5, characterised in that the ratio of d to $d_1$ is between 2 and 6 and of d to $d_R$ is between 6 and 12.

7. A process for mechanical foam breaking, characterised in that the foam is drawn into a rotating suction tube, is distributed over at least 3 channels which branch outwards radially from the suction tube at an angle α of 30 to 60°, the suction tube and channels are set in rotation around the common axis and, under the effect of the rotational forces produced, the foam is compressed inside the channels and is thrown outwards.

## Revendications

1. Destructeur mécanique de mousse comportant une tubulure d'aspiration rotative (1) pour la mousse et au moins 3 canaux (2) qui s'étendent radialement vers l'extérieur de la tubulure d'aspiration (1) sous l'angle α de 30 à 60°.

2. Destructeur mécanique de mousse suivant la revendication 1, caractérisé en ce que les canaux (2) ont une section transversale circulaire.

3. Destructeur mécanique de mousse suivant l'une des revendications 1 ou 2, caractérisé en ce que l'angle α est compris entre 40 et 50°.

4. Destructeur mécanique de mousse suivant une ou plusieurs des revendications 1 à 3, caractérisé en ce qu'il comporte 3 à 10, de préférence 4 à 8 canaux.

5. Destructeur mécanique de mousse suivant une ou plusieurs des revendications 1 à 4, caractérisé en ce que les ouvertures de sortie des canaux (2) sont disposées sur un cercle d'un diamètre d d'au moins 200 mm, le diamètre $d_R$ d'un canal est d'au moins 20 mm, tandis que le diamètre $d_1$ de la tubulure d'aspiration est d'au moins 40 mm.

6. Destructeur mécanique de mousse suivant une ou plusieurs des revendications 1 à 5, caractérisé en ce que le rapport entre d et $d_1$ se situe entre 2 et 6, tandis que le rapport entre d et $d_R$ se situe entre 6 et 12.

7. Procédé pour la destruction mécanique de mousse, caractérisé en ce que la mousse est aspirée dans une tubulure d'aspiration rotative, puis elle est répartie sur au moins 3 canaux s'étendant radialement vers l'extérieur de la tubulure d'aspiration sous un angle α de 30 à 60°, tandis que la tubulure d'aspiration et les canaux sont entraînés en rotation autour de leur axe commun et, sous l'action des forces de rotation qui en résultent, la mousse est comprimée à l'intérieur des canaux, puis est expulsée vers l'extérieur.

FIG. 1

FIG. 2

## FIG. 3

## FIG. 4

FIG. 5

FIG. 6

$u = 18\upsilon^{1/3}$